(19) **Europäisches Patentamt**

**European Patent Office**

**Office européen des brevets**

(11) Veröffentlichungsnummer: **0 505 959 B1**

(12) **EUROPÄISCHE PATENTSCHRIFT**

(45) Veröffentlichungstag der Patentschrift: **26.07.95**

(51) Int. Cl.[6]: **C08F 6/00**, C08L 31/00

(21) Anmeldenummer: **92104986.2**

(22) Anmeldetag: **23.03.92**

(54) **Verfahren zur Verminderung des Restmonomerengehaltes in wässrigen Kunststoffdispersionen auf Polyvinylesterbasis.**

(30) Priorität: **27.03.91 DE 4110058**

(43) Veröffentlichungstag der Anmeldung:
**30.09.92 Patentblatt 92/40**

(45) Bekanntmachung des Hinweises auf die
Patenterteilung:
**26.07.95 Patentblatt 95/30**

(84) Benannte Vertragsstaaten:
**AT BE CH DE ES FR GB IT LI NL SE**

(56) Entgegenhaltungen:
**EP-A- 0 158 523**
**EP-A- 0 316 090**
**DE-A- 1 696 171**
**US-A- 4 219 455**

(73) Patentinhaber: **HOECHST AKTIENGESELL-SCHAFT**

**D-65926 Frankfurt (DE)**

(72) Erfinder: **Huth, Hans-Ullrich, Dr.**
**Finkenweg 6**
**W-6073 Egelsbach (DE)**
Erfinder: **Rinno, Helmut, Dr.**
**Goethestrasse 38**
**W-6238 Hofheim 7 (DE)**
Erfinder: **Momper, Bernhard, Dr.**
**Weisenauer Gasse 13**
**W-6094 Bischofsheim (DE)**

EP 0 505 959 B1

**Beschreibung**

Die Erfindung betrifft ein Verfahren zur Verminderung von unerwünschten, herstellungsbedingten Restmonomergehalten in wäßrigen Kunststoffdispersionen, deren Polymermoleküle Monomereinheiten aus Vinylestern enthalten und die Gehalte an restmonomeren Vinylestern und gegebenenfalls an Acetaldehyd aufweisen, durch selektive alkalische Verseifung der alkalisch verseifbaren restmonomeren Vinylester und Oxidation des gegebenenfalls bereits vorhandenen sowie des zusätzlich aus den Vinylestern als Verseifungsprodukt entstehenden Acetaldehyds in der Dispersion. Bevorzugt werden leicht flüchtige Vinylester, vorzugsweise Vinylacetat und Vinylpropionat, sowie Acetaldehyd, insbesondere Vinylacetat und Acetaldehyd, eliminiert.

Wäßrige Kunststoffdispersionen, die polymere Kunststoffpartikel auf der Basis von ethylenisch ungesättigten Monomeren mit Monomereinheiten aus Vinylestern enthalten, sind seit langem bekannt und besitzen viele Anwendungsgebiete, beispielsweise als Bindemittel für Farben und Anstriche, als Textilhilfsmittel, als Klebstoff, als Papierleimungsmittel, als Bindemittel für Faservliese und Syntheseleder, etc. Die Vorteile von Bindemittelsystemen und Klebstoffen auf wäßriger Dispersionsbasis sind u.a. ihre einfache Handhabbarkeit (Ungiftigkeit, Unbrennbarkeit, leichte Reinigung der Arbeitsgeräte, unproblematische Entsorgung) und ihre vorteilhaften ökologischen Eigenschaften, vergleichsweise zu konventionellen lösungsmittelhaltigen Lacken und Harzen bzw. deren Lösungen in organischen Lösungsmitteln. Organische Lösungsmittel sind in den wäßrigen Kunststoffdispersionen weitgehend bzw. vollständig entbehrlich und auch Polymerisate mit sehr hohen Molekulargewichten können als wäßrige Dispersionen mit hohem Polymerisatgehalt und niedriger Viskosität hergestellt und gefahrlos verarbeitet werden, im Gegensatz zu Lösungen solcher Polymerisate in organischen Lösungsmitteln, die im allgemeinen sehr hochviskos sind und folglich nur niedrig konzentriert verwendet werden können und bei ihrer Anwendung entsprechend große Lösungsmittelmengen freisetzen.

Wäßrige Kunststoffdispersionen finden daher zunehmend stärkere Verbreitung und neue Anwendungsgebiete. Unter den Kunststoffdispersionen auf Polyvinylesterbasis sind verschiedene Typen besonders bekannt, beispielsweise Vinylacetat-Homopolymerisatdispersionen z.B. für Klebstoffe, Vinylacetat/Vinylversatat- oder Vinylacetat/Butylacrylat-Copolymerisatdispersionen z.B. für Anstriche, Vinylacetat/Ethylen- bzw. Vinylacetat/Ethylen/Vinychlorid-Copolymerisatdispersionenz.B. als Bindemittel für Faservliese, als Leimungsmittel bei der Papierherstellung und als Bindemittel für Anstrichfarben, oder Vinylacetat/Dibutylmaleinat-Copolymerisatdispersionen. Bekannt sind daneben auch sogenannte Reinacrylat-polymerisat- bzw. -copolymerisat-dispersionen und Styrol/Acrylat-Copolymerisatdispersionen z.B. für besonders hochwertige Beschichtungen und für wetterfeste Außenanstriche, wobei diese Dispersionen auch mit Kunststoffdispersionen auf Polyvinylesterbasis zur Eigenschaftsmodifizierung kombiniert oder aus Kostengründen mit diesen gestreckt werden können.

Es ist ferner bekannt, daß die üblichen wäßrigen Kunststoffdispersionen teilweise noch geringe Anteile an niedermolekularen organischen Lösungsmitteln, z.B. Filmbildehilfsmittel und/oder äußere Weichmacher, Monomerlösungsmittel aus dem Polymerisationsverfahren, Spaltprodukte oder Nebenprodukte der Ausgangsmonomeren, enthalten, deren Anwesenheit bei manchen Anwendungen störend sein kann, insbesondere wenn es sich dabei um leichtflüchtige, gegebenenfalls toxische bzw. gegebenenfalls geruchsintensive organische Verbindungen handelt. Diese Nebenprodukte stören insbesondere beim Einsatz der Dispersionen für Innenanwendungen, z.B. für Innenanstriche, Innenfarben und Innenputze, insbesondere wenn diese in geschlossenen Räumen verarbeitet werden, wo heute immer häufiger geruchsfreie und emissionsfreie Produkte gefordert werden. Die Nachfrage nach Kunststoffdispersionen, die praktisch frei sind von Restmonomeren, insbesondere von leichtflüchtigen Restmonomeren, und von anderen flüchtigen organischen Substanzen, ist daher von hoher Aktualität, wobei die störende Restmonomerenkonzentration (RMK) in den wäßrigen Kunststoffdispersionen zumindest im Bereich von < 0,1 Gew.-%, bezogen auf die Dispersion, liegen soll. Einige gebräuchliche Polymerisat- bzw. Copolymerisatdispersionstypen, wie z.B. die Reinacrylatdispersionen und die Styrol/Acrylat-Copolymerisatdispersionen, können diese RMK-Anforderungen bereits aufgrund ihrer vorteilhaften Herstellungsverfahren erfüllen, bei denen sie mit RMK-Werten von ≦ 0,01 Gew.-%, bezogen auf die Dispersion, anfallen. In manchen Fällen lassen sich die gewünschten RMK-Werte auch durch spezielle Nachbehandlungsmaßnahmen an den Dispersionen, wie z.B. Destillation unter Vakuum, Wasserdampfdestillation, Luftdurchblasen bzw. Stickstoffdurchblasen oder Nachbehandlung mit Redoxpolymerisationskatalysatoren erzielen. Die Restmonomerenanteile beispielsweise von Vinylchlorid und von Acrylnitril lassen sich durch solche Nachbehandlungsmaßnahmen unmittelbar auf RMK-Werte von ≦ 0,001 Gew.-%, bezogen auf die Dispersion, reduzieren. Die bekannten Maßnahmen zur nachträglichen Senkung der RMK-Werte sind jedoch nicht bei allen Monomertypen und Monomerkonzentrationen zufriedenstellend anwendbar. So können z.B. Redoxpolymerisationskatalysatoren nur bei Restmonomerausgangskonzentrationen im Bereich von 0,1 bis 0,5 Gew.-%, bezogen auf die Dispersion, zufriedenstellend eingesetzt werden,

2

wobei sich außerdem häufig der RMK-Wert nur auf maximal 0,1 Gew.-%, bezogen auf die Dispersion, senken läßt. Das Redox-Nachpolymerisationverfahren ist daher in vielen Fällen nicht sicher genug, um die RMK-Werte mindestens in den Bereich von 0,05 bis 0,1 Gew.-%, bezogen auf die Dispersion, zu reduzieren. Es hat daher nicht an Versuchen gefehlt, die Wirksamkeit der Redox-Nachbehandlung zu erhöhen, beispielsweise durch Verlangsamung der Abkühlung des Polymerisationsgemisches im Reaktor, was u.a. ungünstige Auswirkungen auf die Raum-Zeit-Ausbeuten bei der Polymerisation hat. Ein weiterer Nachteil besteht darin, daß das Redoxsystem, insbesondere dessen Oxidationsmittelkomponente, in manchen Fällen zu einer Erniedrigung der Dispersionsviskosität, verbunden mit einer Verringerung der Dispersionsstabilität, führt. Chemische Nachbehandlungen der Dispersionen, wie z.B. der Zusatz von Redox-Systemen, bringen außerdem zusätzliche Substanzen in das Produkt, was häufig unerwünscht ist, insbesondere wenn diese Substanzen toxikologisch bedenklich oder, wie z.B. Rongalit, von den Verarbeitern der Dispersionen als Produktbestandteil unerwünscht sind. Auch Entmonomerisierungsmethoden mittels Vakuumdestillation oder Wasserdampfdestillation sind im allgemeinen unbefriedigend, obgleich sie in vielen Fällen eine Restmonomerenverminderung bis in den unteren ppm-Bereich ermöglichen können. Sie verursachen aber erhebliche Energiekosten, verlängerte Reaktorbelegungen, zusätzliche Aufarbeitung des Destillats und die Bildung von Stippen in der Dispersion sowie Belagbildungen an den Reaktorwänden. Auch werden höhersiedende Restmonomere, wie z.B. Vinylversatat oder Oktylacrylat, nur unvollständig eliminiert. Zu den Dispersionen, für die bisher noch kein wirksames Restmonomereneliminierungsverfahren bekannt geworden ist, zählen vor allem die Homo- und Copolymerisatdispersionen des Vinylacetats sowie auch des Vinylpropionats, insbesondere aber des Vinylacetats.

Je nach Typ und Herstellungsmethode enthalten bekanntlich wäßrige Homo- und Copolymerisatdispersionen des Vinylacetats im allgemeinen 0,2 bis 0,5 Gew.-% restmonomeres Vinylacetat und 0,01 bis 0,05 Gew.-% Acetaldehyd, jeweils bezogen auf die Dispersion. Durch Redox-Nachbehandlungen läßt sich der restmonomere Vinylacetatgehalt auf etwa 0,05 bis 0,1 Gew.-%, bezogen auf die Dispersion, senken, während sich der Acetaldehydgehalt durch diese Methode praktisch nicht vermindern läßt. Acetaldehyd hat sich jedoch neuerdings bekanntlich als besonders toxisch erwiesen und ist in wäßrigen Kunststoffdispersionen in hohem Maße unerwünscht.

Die Anwendung von physikalischen Entmonomerisierungsmethoden ist bei Kunststoffdispersionen aus Vinylacetatpolymeren und -copolymeren im allgemeinen problematisch, insbesondere wegen der hohen Viskositäten dieser Dispersionen, der schwierigen Aufrechterhaltung der Dispersionsstabilität während der Durchführung von Destillationen (Stippenbildung und Belagbildung an den Reaktorwänden) sowie der starken Neigung dieser Dispersionen zum Schäumen.

Der vorliegenden Erfindung lag somit die Aufgabe zugrunde, ein Verfahren zu entwickeln, das es ermöglicht, insbesondere bei Homo- und Copolymerisatdispersionen des Vinylacetats deren Restmonomerenkonzentration, vorzugsweise deren leichtflüchtige Restmonomerenkonzentration, auf Werte von $\leq$ 0,01 Gew.-%, bezogen auf die Dispersion, zu vermindern. Es war dabei außerdem wünschenswert, auch den in Vinylesterpolymerisat- bzw. -copolymerisatdispersionen häufig vorhandenen Acetaldehydgehalt ebenso nachhaltig zu vermindern, ohne die charakteristischen Anwendungseigenschaften der Dispersionen zu beeinträchtigen.

Diese Aufgabe konnte nun überraschenderweise dadurch gelöst werden, daß man die Dispersionen einer nachträglichen Verseifungsbehandlung bei einem schwach alkalischen $p_H$-Wert und erhöhter Temperatur unterwirft, in deren Verlauf die alkalisch verseifbaren restmonomeren Vinylesteranteile praktisch vollständig hydrolytisch in Carbonsäuren und Acetaldehyd gespalten werden, während die entsprechenden Vinylestereinheiten in den Polymerisat- bzw. Copolymerisatmolekülen der polymeren Dispersionspartikel überraschenderweise weitgehend unverändert bleiben. Darüber hinaus läßt sich durch gleichzeitigen oder nachfolgenden Zusatz von Oxidationsmitteln der Acetaldehydgehalt in den Dispersionen dadurch weitgehend eliminieren, daß man Acetaldehyd oxidativ in Essigsäure umwandeln kann. Die Verseifungsbehandlung in dem schwach alkalischen $p_H$-Bereich wird vorzugsweise bei $p_H$ 7,5 bis 9, insbesondere bei $p_H$ 8 bis 8,5 , durchgeführt, wobei der gewählte $p_H$-Wert auf $\pm$ 0,1 bis zur vollständigen Verseifung der monomeren Vinylester einzuhalten bzw. konstant zu halten ist, gegebenenfalls bei gleichzeitiger Anwesenheit eines Oxidationsmittels oder bei Zugabe des Oxidationsmittels nach erfolgter Verseifung bis zur vollständigen Oxidation des Acetaldehyds. Die Verseifung der restmonomeren Vinylester ist erfindungsgemäß dann beendet, wenn bei der gewählten Verseifungstemperatur der gewählte schwach alkalische $p_H$-Wert ohne weitere Zudosierung der verwendeten basischen Verbindung innerhalb des Bereichs von $\pm$ 0,1 $p_H$-Werteinheiten, vorzugsweise $\pm$ 0,05 $p_H$-Werteinheiten, konstant bleibt. Danach wird die Dispersion auf Raumtemperatur abgekühlt, gegebenenfalls darin vorhandenes überschüssiges Oxidationsmittel chemisch oder katalytisch zerstört und die Dispersion durch Zugabe einer entsprechenden Menge einer anorganischen oder organischen Säure wieder auf ihren ursprünglichen, vorzugsweise sauren, insbesondere schwach sauren, $p_H$-Wert eingestellt. Nach erfolgter Verseifungsreaktion und Oxidation beträgt der Gehalt an alkalisch verseifbaren restmonomeren Vinylestern und an Acetaldehyd jeweils weniger als 0,01 Gew.-%, vorzugsweise weniger als 0,002 Gew.-%, bezogen auf die Dispersion, d.h. die in der Ausgangsdispersion insbesondere störenden restmonomeren Vinylesteranteile und der Acetaldehyd können erfindungsgemäß praktisch vollständig eliminiert werden. Die bei der Verseifungsreaktion und Oxidation mit den erforderlichen Reagenzien in die Dispersion eingebrachten Wasseranteile verringern den prozentualen polymeren Feststoffanteil in der Dispersion entsprechend, was praktisch nicht von Nachteil zu sein braucht, da die Ausgangsdispersion im allgemeinen bereits bei ihrer Herstellung unschwer auf einen entsprechend höheren Ausgangsfeststoffgehalt eingestellt werden kann.

Gegenstand der Erfindung ist daher ein Verfahren zur Verminderung des Gehaltes an restmonomeren Vinylestern und gegebenenfalls an Acetaldehyd in wäßrigen Kunststoffdispersionen, die disperse Polymerisatpartikel auf der Basis von ethylenisch ungesättigten Monomeren mit Monomereinheiten aus Vinylestern enthalten und aus den zugrunde liegenden Monomeren bzw. Comonomeren durch Emulsions-, Suspensions-, Perl- oder Lösungspolymerisation hergestellt wurden, dadurch gekennzeichnet, daß man zur Eliminierung von Restgehalten an monomeren Vinylestern und gegebenenfalls an Acetaldehyd die alkalisch verseifbaren monomeren Vinylester durch eine Verseifungsbehandlung der Dispersionen bei einem schwach alkalischen $p_H$-Wert und erhöhter Temperatur hydrolytisch in die entsprechenden Carbonsäuren und in Acetaldehyd spaltet und den Acetaldehyd gegebenenfalls gleichzeitig oder nachfolgend durch Zusatz eines Oxidationsmittels zu Essigsäure oxidiert.

Das erfindungsgemäße Verfahren ist bevorzugt zur Eliminierung von restmonomerem Vinylacetat und Vinylpropionat, insbesondere Vinylacetat, anwendbar.

Bevorzugt eingesetzte Ausgangskunststoffdispersionen sind solche, deren Polymerisatpartikel Homopolymerisate oder Copolymerisate des Vinylacetats oder Vinylpropionats, insbesondere des Vinylacetats, enthalten oder aus Homo- oder Copolymerisaten des Vinylacetats oder Vinylpropionats, vorzugsweise des Vinylacetats, bestehen und gegebenenfalls Monomereinheiten aus Versaticsäurevinylester enthalten.

Bevorzugt eingesetzte Ausgangskunststoffdispersionen sind ferner solche, deren Polymerisatpartikel Copolymere aus Vinylacetat und einer oder mehreren Monomereinheiten aus der Gruppe Vinylester von $(C_3-C_{18})$-Carbonsäuren, Acrylester, Methacrylester, Maleinsäure-, Fumarsäure-, Itakonsäure-Halbester oder -Diester von $(C_1-C_{22})$-Alkoholen oder von $(C_2-C_{22})$-Hydroxyalkoholen, Amide oder Mono- oder Di-$(C_1-C_{12})$-alkylamide oder -$(C_2-C_{12})$alkylolamide von ethylenisch ungesättigten $(C_3-C_5)$-Mono- oder -Dicarbonsäuren, Ethylen, Vinylchlorid, Vinylidenchlorid, Acrylnitril, Acrylsäure, Methacrylsäure oder Vinylsulfonsäure enthalten.

Die Durchführung der Verseifungsbehandlung der Dispersion bei einem schwach alkalischen $p_H$-Wert und bei erhöhter Temperatur erfolgt vorzugsweise im $p_H$-Bereich von 7,5 bis 9, insbesondere von 8 bis 8,5 und vorzugsweise im Temperaturbereich von 20 bis 100 °C, insbesondere 40 bis 80 °C, besonders bevorzugt 50 bis 70 °C. Bei diesen bevorzugten $p_H$-Werten und bevorzugten Verseifungstemperaturen findet bevorzugt auch die Umsetzung von Acetaldehyd mit einem organischen oder anorganischen Oxidationsmittel statt, und zwar entweder während der Verseifungsreaktion oder danach, vorzugsweise gleichzeitig.

Zur Durchführung der Verseifungsreaktion werden der wäßrigen Kunststoffdispersion bei der gewählten erhöhten Temperatur sukzessive anorganische oder organische basische Verbindungen zugesetzt, vorzugsweise zumindest stöchiometrische Mengen bezogen auf die zur Neutralisation in der Dispersion gegebenenfalls bereits vorliegenden freien Säuren zuzüglich den bei der Verseifungsreaktion aus den Vinylestern und gegebenenfalls durch Oxidation von Acetaldehyd noch entstehenden Säuren, so daß in der Dispersion ein schwach alkalischer $p_H$-Wert resultiert, der während des Ablaufs der Verseifungsreaktion weitgehend konstant zu halten ist, wobei evtl. Schwankungsbreiten bzw. Abweichungen von dem gewählten schwach alkalischen $p_H$-Wert vorzugsweise nicht größer als ± 0,1 bis 0,05 $p_H$-Wert-Einheiten sein sollen. Der Zusatz der basischen Verbindungen erfolgt vorzugsweise in Form von verdünnten wäßrigen Basenlösungen, insbesondere mit Basenkonzentrationen von 0,5 bis 50 Gew.-%, besonders bevorzugt 5 bis 30 Gew.-%, um eine exakte Dosierung bei der $p_H$-Wert-Einstellung zu ermöglichen. Die $p_H$-Kontrolle der Dispersion erfolgt vorzugsweise ständig mittels einer Glaselektrode, um eine exakte $p_H$-Wert-Einstellung bzw. -Aufrechterhaltung zu gewährleisten.

Die Verseifungsbehandlung der Dispersion kann diskontinuierlich, z.B. in einer heizbaren Rührapparatur, oder kontinuierlich, z.B. in einem heizbaren Röhrenreaktor, erfolgen, wobei im Röhrenreaktor Temperaturen bis zu 100 °C, vorzugsweise 85 bis 100 °C, und Verweilzeiten von 1 bis 5 Minuten vorteilhaft sein können. Die Verseifungsgeschwindigkeit nimmt unter vergleichbaren Bedingungen mit steigender Reaktionstemperatur zu. Im allgemeinen kann die Verseifungs- und Oxidationsbehandlung vorzugsweise zwischen 1 Minute und 7 Stunden, insbesondere 6 Minuten bis 4 Stunden, dauern. Vorzugsweise werden die unmittelbar nach ihrer Herstellung häufig warm anfallenden Ausgangspolymerisatdispersionen sogleich der erfindungsgemäßen Verseifungsbehandlung zugeführt.

Als basische Verbindungen kommen im Sinne der Erfindung vorzugsweise folgende Verbindungen bzw. insbesondere deren wäßrige Lösungen bzw. wäßrige Verdünnungen zur Anwendung:

Alkalioxide, Alkalihydroxide, Alkaliperoxide, Alkalicarbonate, -hydrogencarbonate, Erdalkalioxide, Erdalkalihydroxide, Erdalkaliperoxide, Erdalkalicarbonate, Ammoniak, Alkanolamine, quaternäre Alkyl- oder Alkylarylammoniumhydroxide, wobei Alkaliverbindungen, insbesondere Natriumhydroxid, und Ammoniak besonders bevorzugt sind.

Als Oxidationsmittel zur Umwandlung des Acetaldehyds in Essigsäure kommen in der Dispersion, vorzugsweise unter den Bedingungen der Verseifungsbehandlung, bevorzugt folgende Verbindungen zur Anwendung:

Organische oder anorganische Oxidationsmittel, vorzugsweise aus der Gruppe anorganische oder organische Peroxide, Perhydroxyverbindungen, Perester, Persulfate, Peroxidisulfate, Perborate, $H_2O_2$, Ozon, Sauerstoff, insbesondere wäßrige Lösungen bzw. Verdünnungen nichtgasförmiger Oxidationsmittel. Besonders bevorzugt sind $H_2O_2$ bzw. dessen wäßrige Verdünnungen.

Das Oxidationsmittel wird der Dispersion vorzugsweise in 3 bis 7-fachem stöchiometrischen Überschuß, bezogen auf oxidierbare Bestandteile in der Dispersion, insbesondere bezogen auf den zu oxidierenden Acetaldehyd, zugesetzt.

Nach erfolgter Oxidation des Acetaldehyds wird gegebenenfalls in der Dispersion noch vorhandenes überschüssiges Oxidationsmittel katalytisch oder reduktiv zerstört, vorzugsweise durch Zusatz von katalytisch oder reduktiv wirkenden Verbindungen, insbesondere von katalytisch oder reduktiv wirkenden Verbindungen aus der Gruppe der Metallsalze, Metalloxide, Metallhydroxide, Metallpulver von Eisen, Cobalt, Nickel, Palladium, Platin, Silber, oder von Reduktionsmitteln aus der Gruppe Ascorbinsäure, Rongalit, Sulfite, Zucker oder Hydrazinverbindungen.

Der Zusatz von katalytisch oder reduktiv wirkenden Verbindungen zu der Dispersion erfolgt vorzugsweise nach vorheriger Abkühlung der entmonomerisierten Dispersion auf Raumtemperatur.

Erfindungsgemäß liegen die Gehalte an den alkalisch verseifbaren restmonomeren Vinylestern, vorzugsweise an Vinylacetat, sowie an Acetaldehyd in der wäßrigen Kunststoffdispersion nach Beendigung der erfindungsgemäßen Eliminerungsreaktionen jeweils unterhalb von 0,01 Gew.-%, vorzugsweise bei $\leq$ 0,002 Gew.-%, jeweils bezogen auf die Dispersion.

Nach Beendigung der Eliminerungsreaktionen kann ferner der $p_H$-Wert der entmonomerisierten wäßrigen Dispersionen durch Zusatz von anorganischen oder organischen Säuren wieder auf den ursprünglichen $p_H$-Wert der Ausgangsdispersion, vorzugsweise auf einen $p_H$-Wert von < 7, eingestellt werden. Bevorzugt erfolgt diese $p_H$-Wert-Einstellung durch Zugabe von Säuren aus der Gruppe Essigsäure, Propionsäure, Ameisensäure, Schwefelsäure, vorzugsweise wäßrigen Verdünnungen dieser Säuren.

Die erfindungsgemäß von Restmonomeranteilen und Acetaldehyd befreiten und emissionsarm bzw. emissionsfrei erhaltenen wäßrigen Kunststoffdispersionen auf Basis von Vinylestermonomereinheiten enthaltenden Polymerisaten eignen sich vorzugsweise als Bindemittel in emissionsarmen bzw. emissionsfreien wäßrigen Zubereitungen für Anstriche, Beschichtungen, Putzmörtel, Dekorationsmörtel, Klebstoffe, Papierleimungsmittel, Faservliesbindemittel, Textilhilfsmittel, Lebensmittelbeschichtungsmittel, Anstrichfarben und chemisch-technische Formulierungen, insbesondere für Anwendungen in Innenräumen bzw. in geschlossenen Räumen.

Die Erfindung wird durch die nachfolgenden Beispiele näher erläutert.

Beispiel 1

In einem 2 l-Vierhalskolben mit Claisen-Aufsatz, Rührwerk, Rückflußkühler, Thermometer, Tropftrichter und $p_H$-Meßelektrode (Glaselektrode) werden 1 kg einer wäßrigen Vinylacetat-Vinylversatat-Copolymer-Dispersion vorgelegt und unter Rühren auf 55 °C erwärmt. Die Dispersion enthält 11,5 Gew.-% Polyvinylalkohol als Schutzkolloid und 0,3 Gew.-% anionischen Emulgator, jeweils bezogen auf das Copolymerisat. Der $p_H$-Wert der Dispersion beträgt 4,4 und der Feststoffgehalt 35 Gew.-%, bezogen auf die Dispersion. Die gaschromatographische Analyse ergibt Gehalte von 0,12 Gew.-% restmonomeres Vinylacetat und 0,011 Gew.-% Acetaldehyd, jeweils bezogen auf die Dispersion. Unter starkem Rühren wird der Dispersion eine 15 gew.-%ige wäßrige $Na_2O_2$-Lösung zudosiert, bis der $p_H$-Wert 8,5 ± 0,1 (Glaselektrode) beträgt und konstant bleibt. Dabei wird die anfangs notwendige höhere Zudosiergeschwindigkeit allmählich reduziert und die Zudosierung ist nach ca. 5 Stunden beendet. Der Verbrauch an 15 gew.-%iger $Na_2O_2$-Lösung beträgt 17,6 ml, entsprechend 33,5 mMol $Na_2O_2$. Nach dem Abkühlen auf Raumtemperatur besitzt die Dispersion einen $p_H$-Wert von 7,9 , einen Feststoffgehalt von 33,7 Gew.-%, einen Gehalt an restmonomerem

EP 0 505 959 B1

Vinylacetat von 0,008 Gew.-% und einen Gehalt an Acetaldehyd von 0,005 Gew.-%, jeweils bezogen auf die Dispersion. Die Dispersion wird anschließend sprühgetrocknet und die Eigenschaften des resultierenden Polymerisatpulvers werden mit denen eines aus der Ausgangsdispersion in analoger Weise hergestellten Polymerisatpulvers verglichen. Außer einer geringen Erhöhung der Wasseraufnahme bei dem aus der erfindungsgemäß entmonomerisierten Dispersion hergestellten Polymerisatpulver sind keine weiteren Eigenschaftsunterschiede der beiden Polymerisatpulver erkennbar.

Beispiel 2

In der in Beispiel 1 beschriebenen Apparatur wird 1 kg einer wäßrigen, emulgator- und schutzkolloidstabilisierten Vinylacetat-Homopolymerisat-Dispersion vorgelegt. Der $p_H$-Wert der Dispersion beträgt 4,8 und der Feststoffgehalt 53 Gew.-%, der gaschromatographisch ermittelte restmonomere Vinylacetatgehalt beträgt 0,37 Gew.-% und der Acetaldehydgehalt 0,036 Gew.-%, jeweils bezogen auf die Dispersion.

Die vorgelegte Dispersion wird unter Rühren mit 30 g einer 30 gew.-%igen wäßrigen $H_2O_2$-Lösung versetzt und auf 60 °C erwärmt. Dann wird bei 60 °C unter starkem Rühren 20 gew.-%ige wäßrige Natronlauge zudosiert, bis der $p_H$-Wert 8,0 ± 0,1 beträgt und konstant bleibt, was nach ca. 1,5 Stunden der Fall ist. Der Verbrauch an 20 gew.-%iger Natronlauge beträgt 24 ml. Nach Abkühlen der Dispersion auf Raumtemperatur werden unter Rühren 32 ml 5 gew.-%ige wäßrige Ascorbinsäurelösung zudosiert und nach 30 Minuten wird durch Zudosieren von 50 ml 20 gew.-%iger wäßriger Essigsäure der $p_H$-Wert auf 4,5 eingestellt. Es resultiert eine stippenfreie Dispersion mit einem Feststoffgehalt von 48,9 Gew.-%, bezogen auf die Dispersion, die frei ist von Peroxiden und deren Gehalte an monomerem Vinylacetat und an Acetaldehyd jeweils unterhalb der Nachweisgrenze von 0,002 Gew.-%, bezogen auf die Dispersion, liegen.

Beispiel 3

In der in Beispiel 1 beschriebenen Apparatur wird 1 kg einer wäßrigen Vinylacetat-Vinylversatat-Copolymerisatdispersion vorgelegt, die 2 Gew.-% Schutzkolloid und 6 Gew.-% Emulgator (anionisch/nichtionogen), jeweils bezogen auf das Copolymerisat, enthält. Der Feststoffgehalt der Dispersion beträgt 49,8 Gew.-%, bezogen auf die Dispersion, und der $p_H$-Wert beträgt 2,9. Der gaschromatographisch ermittelte Gehalt an restmonomerem Vinylacetat beträgt 0,35 Gew.-% und der Acetaldehydgehalt 0,032 Gew.-%, jeweils bezogen auf die Dispersion.

Die vorgelegte Dispersion wird unter Rühren auf 65 °C erwärmt und es wird bei dieser Temperatur unter starkem Rühren eine 15 gew.-%ige wäßrige Kalilauge zudosiert, bis der $p_H$-Wert 8,0 ± 0,1 beträgt und konstant bleibt, was nach ca. 3 Stunden der Fall ist. Der Verbrauch an 15 gew.-%iger Kalilauge beträgt 50,5 ml. Die Dispersion wird auf Raumtemperatur abgekühlt und ausgeprüft bzw. analysiert. Der restmonomere Vinylacetatgehalt liegt unterhalb der Nachweisgrenze von 0,002 Gew.-%, bezogen auf die Dispersion. Der Acetaldehydgehalt steigt infolge des Fehlens eines Oxidationsmittels auf 0,183 Gew.-% an, bezogen auf die Dispersion. Die Dispersion ist stippenfrei, jedoch leicht gelb gefärbt und besitzt einen Feststoffgehalt von 48,1 Gew.-%, bezogen auf die Dispersion. Nach dem Abkühlen auf Raumtemperatur und ca. 12-stündigem Stehen bei Raumtemperatur ohne Säurezugabe fällt der $p_H$-Wert auf 7,3 ab und bleibt dann konstant.

Beispiel 4

In der in Beispiel 1 beschriebenen Apparatur wird 1 kg einer wäßrigen Vinylacetat-Butylacrylat-Copolymerisatdispersion vorgelegt, deren Feststoffgehalt 54,5 Gew.-%, bezogen auf die Dispersion, und deren $p_H$-Wert 4,1 beträgt. Die Dispersion enthält als Schutzkolloid 0,35 Gew.-% Hydroxyethylcellulose und 4,4 Gew.-% Emulgator (anionisch/nichtionogen), jeweils bezogen auf das Copolymerisat. Der gaschromatographisch ermittelte Gehalt an restmonomerem Vinylacetat beträgt 0,18 Gew.-% und der Acetaldehydgehalt 0,015 Gew.-%, jeweils bezogen auf die Dispersion.

Die vorgelegte Dispersion wird unter Rühren mit 32 g 70 gew.-%igem tert.-Butylhydroperoxid versetzt und auf 60 °C erwärmt. Dann wird bei 60 °C unter starkem Rühren eine 10 gew.-%ige wäßrige Natronlauge zudosiert, bis der $p_H$-Wert 8,0 ± 0,1 beträgt und konstant bleibt, was nach ca. 6 Stunden der Fall ist. Der Verbrauch an 10 gew.-%iger Natronlauge beträgt 31 ml. Nach Abkühlen der Dispersion auf Raumtemperatur werden ihr unter Rühren 30 ml einer 5 gew.-%igen wäßrigen Ascorbinsäurelösung zudosiert und 30 Minuten danach wird durch Zudosieren von 57 ml 10 gew.-%iger wäßriger Essigsäure der $p_H$-Wert auf 4,5 eingestellt. Es resultiert eine stippenfreie Dispersion mit einem Feststoffgehalt von 51,1 Gew.-%, bezogen auf die Dispersion, die frei ist von Peroxiden und deren Gehalte an monomerem Vinylacetat 0,005 Gew.-% und an Acetaldehyd 0,003 Gew.-%, jeweils bezogen auf die Dispersion, betragen.

6

EP 0 505 959 B1

Beispiel 5

In der in Beispiel 1 beschriebenen Apparatur wird 1 kg der in Beispiel 1 beschriebenen Ausgangsdispersion vorgelegt. Die vorgelegte Dispersion wird auf 65 °C erwärmt und unter Rühren innerhalb von 5 Minuten mit 14 g einer 30 gew.-%igen wäßrigen $H_2O_2$-Lösung versetzt. Anschließend wird bei 65 °C unter starkem Rühren 6,7 gew.-%ige wäßrige Natronlauge zudosiert, bis der $p_H$-Wert 8,5 ± 0,1 beträgt und konstant bleibt, was nach ca. 2 Stunden der Fall ist. Der Verbrauch an 6,7 gew.-%iger Natronlauge beträgt 55,5 ml. Nach Abkühlen auf Raumtemperatur werden der Dispersion zur Zersetzung von überschüssigem $H_2O_2$ 65 ml einer 2 gew.-%igen wäßrigen $CoCl_3$-Lösung zudosiert, was zweckmäßig tropfenweise erfolgt, um ein zu starkes Schäumen zu verhindern. Nach etwa 3 Stunden sind die Zudosierung und die Gasentwicklung beendet, wonach die Dispersion noch weitere 3 Stunden gerührt wird. Es resultiert eine stippenfreie Dispersion mit einem Feststoffgehalt von 32 Gew.-%, bezogen auf die Dispersion, die frei ist von Peroxiden und deren Gehalte an monomerem Vinylacetat und an Acetaldehyd jeweils unterhalb der Nachweisgrenze von 0,002 Gew.-%, bezogen auf die Dispersion, liegen.

Die wesentlichen Merkmale, Parameter und Ergebnisse der Beispiele 1 bis 5 sind in der Tabelle 1 zusammengefaßt wiedergegeben.

7

**Tabelle 1:**

Verminderung des Gehaltes an restmonomeren Vinylestern und an Acetaldehyd in Vinylesterhomopolymerisate und/oder Vinylestercopolymerisate enthaltenden wäßrigen Kunststoffdispersionen durch selektive alkalische Verseifung und Oxydation

| Dispersion nach Bsp. Nr. | Reaktionsbedingungen zur Restmonomeren- bzw. Acetaldehyd-verminderung in der Dispersion | | | | | | | Restmonomeren- bzw. Acetaldehydgehalte in der Dispersion (Gew.-% bezogen auf die Dispersion) | | | |
|---|---|---|---|---|---|---|---|---|---|---|---|
| | Temperatur (°C) | pH-Wert (±0,1) | Base zur alkalischen pH-Werteinstellung | Oxidationsmittel | Reaktionsdauer (Stunden) | Säurezusatz zur pH-Werterniedrigung nach der Reaktion | Reduktionsmittel bzw. Katalysator zur Oxidationsmittelüberschußeliminierung | Vinylacetat | | Acetaldehyd | |
| | | | | | | | | vor der Reaktion | nach der Reaktion | vor der Reaktion | nach der Reaktion |
| 1 | 55 | 8,5 | $Na_2O_2$ | $Na_2O_2$ | 5 | - | - | 0,12 | 0,008 | 0,011 | 0,005 |
| 2 | 60 | 8,0 | NaOH | $H_2O_2$ | 1,5 | Essigsäure | Ascorbinsäure | 0,37 | <0,002 | 0,036 | <0,002 |
| 3 | 65 | 8,0 | KOH | - | 3 | - | - | 0,35 | <0,002 | 0,032 | 0,183 |
| 4 | 60 | 8,0 | NaOH | t-Butylhydroperoxid | 6 | Essigsäure | Ascorbinsäure | 0,18 | 0,005 | 0,015 | 0,003 |
| 5 | 65 | 8,5 | NaOH | $H_2O_2$ | 2 | - | $CoCl_3$ | 0,12 | <0,002 | 0,011 | <0,002 |

**Patentansprüche**

1. Verfahren zur Verminderung des Gehaltes an restmonomeren Vinylestern und gegebenenfalls an Acetaldehyd in wäßrigen Kunststoffdispersionen, die disperse Polymerisatpartikel auf der Basis von ethylenisch ungesättigten Monomeren mit Monomereinheiten aus Vinylestern enthalten und aus den zugrundeliegenden Monomeren bzw. Comonomeren durch Emulsions-, Suspensions-, Perl- oder Lösungspolymerisation hergestellt wurden, dadurch gekennzeichnet, daß man zur Eliminierung von Restgehalten an monomeren Vinylestern und gegebenenfalls an Acetaldehyd die alkalisch verseifbaren

8

monomeren Vinylester durch eine Verseifungsbehandlung der Dispersionen bei einem schwach alkalischen $p_H$-Wert und erhöhter Temperatur hydrolytisch in die entsprechenden Carbonsäuren und in Acetaldehyd spaltet und den Acetaldehyd gegebenenfalls gleichzeitig oder nachfolgend durch Zusatz eines Oxidationsmittels zu Essigsäure oxidiert.

2. Verfahren nach Anspruch 1, dadurch gekennzeichnet, daß die Polymerisatpartikel Monomereinheiten aus Vinylacetat oder Vinylpropionat enthalten und Monomereinheiten aus Versaticsäurevinylester enthalten können.

3. Verfahren nach Anspruch 1 oder 2, dadurch gekennzeichnet, daß die Polymerisatpartikel Homopolymerisate oder Copolymerisate des Vinylacetats enthalten oder aus Homo- oder Copolymerisaten des Vinylacetats bestehen.

4. Verfahren nach einem oder mehreren der Ansprüche 1 bis 3, dadurch gekennzeichnet, daß die Polymerisatpartikel Copolymere aus Vinylacetat und einer oder mehreren Monomereinheiten aus der Gruppe Vinylester von $(C_3-C_{18})$-Carbonsäuren, Acrylester, Methacrylester, Maleinsäure-, Fumarsäure-, Itakonsäure-Halbester oder -Diester von $(C_1-C_{22})$-Alkoholen oder von $(C_2-C_{22})$-Hydroxyalkoholen, Amide oder Mono- oder Di-$(C_1-C_{12})$alkylamide oder -$(C_2-C_{12})$alkylolamide von ethylenisch ungesättigten $(C_3-C_5)$-Mono- oder -Dicarbonsäuren, Ethylen, Vinylchlorid, Vinylidenchlorid, Acrylnitril, Acrylsäure, Methacrylsäure oder Vinylsulfonsäure enthalten.

5. Verfahren nach einem oder mehreren der Ansprüche 1 bis 4, dadurch gekennzeichnet, daß man die Verseifungsbehandlung im $p_H$-Bereich von 7,5 bis 9, vorzugsweise 8 bis 8,5 , bei Temperaturen im Bereich von 20 bis 100 °C, vorzugsweise 40 bis 80 °C, und gegebenenfalls die Umsetzung des Acetaldehyds mit einem Oxidationsmittel unter den Verseifungsbedingungen entweder während der Verseifungsreaktion oder danach durchführt.

6. Verfahren nach einem oder mehreren der Ansprüche 1 bis 5, dadurch gekennzeichnet, daß man das Verfahren diskontinuierlich oder kontinuierlich durchführt, wobei das kontinuierliche Verfahren vorzugsweise in einem Röhrenreaktor im Temperaturbereich von 85 bis 100 °C durchgeführt wird.

7. Verfahren nach einem oder mehreren der Ansprüche 1 bis 6, dadurch gekennzeichnet, daß die Verseifungsbehandlung unter Zusatz von anorganischen oder organischen basischen Verbindungen, vorzugsweise in Form von wäßrigen Lösungen oder Verdünnungen dieser basischen Verbindungen und vorzugsweise unter Verwendung von zumindest stöchiometrischen Mengen dieser basischen Verbindungen, bezogen auf die stöchiometrische Gesamtmenge an bereits in der Dispersion vorhandenen sauren Bestandteilen zuzüglich der durch die Restmonomerenverseifung und gegebenenfalls die Acetaldehydoxidation entstehenden Säuren bei Konstanthaltung des für die Verseifungsbehandlung der Dispersion gewählten $p_H$-Wertes, erfolgt.

8. Verfahren nach einem oder mehreren der Ansprüche 1 bis 7, dadurch gekennzeichnet, daß die Verseifungsbehandlung unter Zusatz basischer Verbindungen aus der Gruppe Alkalioxide, Alkalihydroxide, Alkaliperoxide, Alkalicarbonate, -hydrogencarbonate, Erdalkalioxide, Erdalkalihydroxide, Erdalkaliperoxide, Erdalkalicarbonate, Ammoniak, Alkanolamine, quaternäre Alkyl- oder Alkylarylammoniumhydroxide, vorzugsweise wäßrige Lösungen dieser Verbindungen, erfolgt, wobei Alkaliverbindungen und Ammoniak besonders bevorzugt sind.

9. Verfahren nach einem oder mehreren der Ansprüche 1 bis 8, dadurch gekennzeichnet, daß man zur Oxidation des Acetaldehyds anorganische oder organische Oxidationsmittel, vorzugsweise aus der Gruppe anorganische oder organische Peroxide, Perhydroxyverbindungen, Perester, Persulfate, Peroxidisulfate, Perborate, $H_2O_2$, Ozon, Sauerstoff, insbesondere wäßrige Lösungen bzw. Verdünnungen nichtgasförmiger Oxidationsmittel, wobei $H_2O_2$ besonders bevorzugt ist, verwendet.

10. Verfahren nach einem oder mehreren der Ansprüche 1 bis 9, dadurch gekennzeichnet, daß man das Oxidationsmittel in 3- bis 7-fach stöchiometrischem Überschuß verwendet und nach erfolgter Oxidationsreaktion gegebenenfalls überschüssiges Oxidationsmittel durch Zusatz von katalytisch oder reduktiv wirkenden Verbindungen, vorzugsweise von katalytisch oder reduktiv wirkenden Verbindungen aus der Gruppe der Metallsalze, Metalloxide, Metallhydroxide, Metallpulver von Eisen, Cobalt, Nickel, Palladium, Platin, Silber, oder von Reduktionsmitteln aus der Gruppe Ascorbinsäure, Rongalit, Sulfite, Zucker, Hydrazinverbindungen, zerstört.

11. Verfahren nach einem oder mehreren der Ansprüche 1 bis 10, dadurch gekennzeichnet, daß die Gehalte an alkalisch verseifbaren restmonomeren Vinylestern, vorzugsweise an Vinylacetat, und an Acetaldehyd in der wäßrigen Kunststoffdispersion nach Beendigung der hydrolytischen und oxidativen Eliminierungsreaktionen jeweils unterhalb von 0,01 Gew.-%, vorzugsweise bei ≦0,002 Gew.-%, bezogen auf die Dispersion, liegen.

12. Verfahren nach einem oder mehreren der Ansprüche 1 bis 11, dadurch gekennzeichnet, daß man nach Beendigung der Eliminierungsreaktionen den $p_H$-Wert der wäßrigen Dispersion durch Zusatz von anorganischen oder organischen Säuren, vorzugsweise aus der Gruppe Essigsäure, Propionsäure, Ameisensäure, Schwefelsäure, insbesondere wäßrigen Verdünnungen der Säuren, auf den ursprünglichen $p_H$-Wert der Ausgangsdispersion, vorzugsweise auf einen $p_H$-Wert von <7, einstellt.

13. Verwendung von wäßrigen Kunststoffdispersionen, erhalten nach einem oder mehreren der Ansprüche 1 bis 12, als Bindemittel in emissionsarmen bzw. emissionsfreien wäßrigen Zubereitungen für Anstriche, Beschichtungen, Putzmörtel, Dekorationsmörtel, Klebstoffe, Papierleimungsmittel, Faservliesbindemittel, Textilhilfsmittel, Lebensmittelbeschichtungsmittel, Anstrichfarben und chemisch-technische Formulierungen.

## Claims

1. A process for reducing the content of residual monomeric vinyl esters and, where appropriate, of acetaldehyde in aqueous plastics dispersions which contain disperse polymer particles based on ethylenically unsaturated monomers with monomer units of vinyl esters and have been prepared from the monomers or comonomers on which they are based by emulsion, suspension, bead or solution polymerization, which comprises, for elimination of residual contents of monomeric vinyl esters and, where appropriate, of acetaldehyde, subjecting the monomeric vinyl esters which can be hydrolyzed under alkaline conditions to hydrolytic splitting into the corresponding carboxylic acids and into acetaldehyde by a hydrolysis treatment of the dispersions at a weakly alkaline pH and elevated temperature and simultaneously or subsequently, as appropriate, oxidizing the acetaldehyde to give acetic acid, by addition of an oxidizing agent.

2. The process as claimed in claim 1, wherein the polymer particles contain monomer units of vinyl acetate or vinyl propionate and can contain monomer units of vinyl versatate.

3. The process as claimed in claim 1 or 2, wherein the polymer particles contain homopolymers or copolymers of vinyl acetate or are composed of homo- or copolymers of vinyl acetate.

4. The process as claimed in one or more of claims 1 to 3, wherein the polymer particles contain copolymers of vinyl acetate and one or more monomer units from the group comprising vinyl esters of $(C_3-C_{18})$-carboxylic acids, acrylic esters, methacrylic esters, half-esters or diesters of maleic acid, fumaric acid or itaconic acid with $(C_1-C_{22})$-alcohols or $(C_2-C_{22})$-hydroxyalcohols, amides or mono- or di-$(C_1-C_{12})$alkylamides or -$(C_2-C_{12})$alkylolamides of ethylenically unsaturated $(C_3-C_5)$-mono- or -dicarboxylic acids, ethylene, vinyl chloride, vinylidene chloride, acrylonitrile, acrylic acid, methacrylic acid or vinylsulfonic acid.

5. The process as claimed in one or more of claims 1 to 4, wherein the hydrolysis treatment is carried out in the pH range from 7.5 to 9, preferably 8 to 8.5, at temperatures in the range from 20 to 100°C, preferably 40 to 80°C, and if appropriate the reaction of the acetaldehyde with an oxidizing agent under the hydrolysis conditions is carried out either during the hydrolysis reaction or thereafter.

6. The process as claimed in one or more of claims 1 to 5, wherein the process is carried out discontinuously or continuously, the continuous process preferably being carried out in a tubular reactor in the temperature range from 85 to 100°C.

7. The process as claimed in one or more of claims 1 to 6, wherein the hydrolysis treatment is carried out with the addition of inorganic or organic basic compounds, preferably in the form of aqueous solutions or dilutions of these basic compounds, and preferably using at least stoichiometric amounts of these basic compounds, based on the total stoichiometric amount of acid constituents already present in the dispersion plus the acids formed by the residual monomer hydrolysis and if appropriate the acetaldehyde oxidation, the pH chosen for the hydrolysis treatment of the dispersion being kept constant.

8. The process as claimed in one or more of claims 1 to 7, wherein the hydrolysis treatment is carried out with addition of basic compounds from the group comprising alkali metal oxides, alkali metal hydroxides, alkali metal peroxides, alkali metal carbonates, alkali metal bicarbonates, alkaline earth metal oxides, alkaline earth metal hydroxides, alkaline earth metal peroxides, alkaline earth metal carbonates, ammonia, alkanolamines and quaternary alkyl- or alkylarylammonium hydroxides, preferably aqueous solutions of these compounds, alkali metal compounds and ammonia being particularly preferred.

9. The process as claimed in one or more of claims 1 to 8, wherein inorganic or organic oxidizing agents, preferably from the group comprising inorganic or organic peroxides, perhydroxy compounds, peresters, persulfates, peroxydisulfates, perborates, $H_2O_2$, ozone and oxygen, in particular aqueous solutions or dilutions of non-gaseous oxidizing agents, $H_2O_2$ being particularly preferred, are used for the oxidation of the acetaldehyde.

10. The process as claimed in one or more of claims 1 to 9, wherein the oxidizing agent is used in a 3- to 7-fold stoichiometric excess and, when the oxidation reaction has ended, any excess oxidizing agent is destroyed by addition of catalytic or reductive compounds, preferably catalytic or reductive compounds from the group comprising metal salts, metal oxides, metal hydroxides, metal powders of iron, cobalt, nickel, palladium, platinum and silver or reducing agents from the group comprising ascorbic acid, Rongalit, sulfites, sugars and hydrazine compounds.

11. The process as claimed in one or more of claims 1 to 10, wherein the contents of residual monomeric vinyl esters which can be hydrolyzed under alkaline conditions, preferably of vinyl acetate, and of acetaldehyde in the aqueous plastics dispersion when the hydrolytic and oxidative elimination reactions have ended are in each case below 0.01% by weight, preferably ≤0.002% by weight, based on the dispersion.

12. The process as claimed in one or more of claims 1 to 11, wherein, when the elimination reactions have ended, the pH of the aqueous dispersion is brought to the original pH of the starting dispersion, preferably to a pH of <7, by addition of inorganic or organic acids, preferably from the group comprising acetic acid, propionic acid, formic acid and sulfuric acid, in particular aqueous dilutions of the acids.

13. The use of an aqueous plastics dispersion obtained as claimed in one or more of claims 1 to 12 as a binder in low-emission or emission-free aqueous formulations for paint films, coatings, plaster mortars, decorating mortars, adhesives, sizing agents for paper, binders for non-woven fibers, textile auxiliaries, foodstuffs coating agents, paints and industrial chemical formulations.

**Revendications**

1. Procédé pour diminuer la teneur résiduelle en esters vinyliques monomères, et éventuellement en acétaldéhyde, dans les dispersions aqueuses de matières plastiques qui comportent des particules dispersées de polymères à base de monomères à insaturation éthylénique, avec des unités d'esters vinyliques monomères, et qui ont été obtenues à partir des monomères de base ou des comonomères de base par polymérisation en émulsion, en suspension, en perles ou en solution, caractérisé en ce que pour éliminer les teneurs résiduelles en esters vinyliques monomères et éventuellement en acétaldéhyde, on scinde les esters vinyliques monomères qui peuvent être saponifiés par voie alcaline, par un traitement de saponification des dispersions à une valeur de pH légèrement alcaline, et à température élevée, par voie hydrolytique, pour obtenir les acides carboxyliques correspondants et l'acétaldéhyde, et éventuellement on oxyde l'acétaldéhyde en même temps ou ultérieurement par addition d'un agent d'oxydation, pour obtenir l'acide acétique.

2. Procédé selon la revendication 1, caractérisé en ce que les particules polymères comportent des unités monomères d'acétate de vinyle ou de propionate de vinyle et peuvent comporter des unités monomères d'ester vinylique de l'acide versatique.

3. Procédé selon la revendication 1 ou 2, caractérisé en ce que les particules polymères comportent des homopolymères ou copolymères de l'acétate de vinyle ou sont constituées d'homo- ou de copolymères de l'acétate de vinyle.

4. Procédé selon l'une ou plusieurs des revendications 1 à 3, caractérisé en ce que les particules polymères comportent des copolymères de l'acétate de vinyle et d'une ou plusieurs unités de monomères choisies dans le groupe des esters vinyliques d'acides carboxyliques en $C_3$-$C_{18}$, des esters acryliques, des esters méthacryliques, des hémi-esters ou diesters de l'acide maléique, de l'acide fumarique, de l'acide itaconique, d'alcools en $C_1$-$C_{22}$ ou d'hydroxyalcools en $C_2$-$C_{22}$, des amides ou mono- ou dialkylamides en $C_1$-$C_{22}$ ou -alkylolamides en $C_2$-$C_{12}$ d'acides mono- ou dicarboxyliques en $C_3$-$C_5$ à insaturation éthylénique, de l'éthylène, du chlorure de vinyle, du chlorure de vinylidène, de l'acrylonitrile, de l'acide acrylique, de l'acide méthacrylique ou de l'acide vinylsulfonique.

5. Procédé selon l'une ou plusieurs des revendications 1 à 4, caractérisé en ce que l'on effectue le traitement de saponification à une valeur de pH de 7,5 à 9, de préférence de 8 à 8,5, dans un domaine de températures de 20 à 100 °C, de préférence de 40 à 80 °C, et en ce que l'on effectue éventuellement la réaction de l'acétaldéhyde avec un agent d'oxydation dans les conditions de la saponification soit pendant, soit après la réaction de saponification.

6. Procédé selon l'une ou plusieurs des revendications 1 à 5, caractérisé en ce que l'on réalise le procédé en discontinu ou en continu, le procédé en continu étant effectué de préférence dans un réacteur tubulaire, dans un domaine de températures de 85 à 100 °C.

7. Procédé selon l'une ou plusieurs des revendications 1 à 6, caractérisé en ce que l'on effectue le traitement de saponification en ajoutant des composés basiques inorganiques ou organiques, de préférence sous forme de solutions ou de dilutions aqueuses de ces composés basiques, et de préférence en utilisant des quantités au moins stoechiométriques de ces composés basiques, rapporté à la quantité totale stoechiométrique de constituants acides qui se trouvent déjà dans la dispersion, en plus des acides produits par suite de la saponification des monomères résiduels et éventuellement par suite de l'oxydation de l'acétaldéhyde, en maintenant constante la valeur de pH choisie pour le traitement de saponification de la dispersion.

8. Procédé selon l'une ou plusieurs des revendications 1 à 7, caractérisé en ce que le traitement de saponification s'effectue par l'addition de composés basiques du groupe formé par les oxydes alcalins, les hydroxydes alcalins, les peroxydes alcalins, les carbonates et hydrogénocarbonates alcalins, les oxydes d'alcalino-terreux, les hydroxydes d'alcalino-terreux, les peroxydes d'alcalino-terreux, les carbonates d'alcalino-terreux, l'ammoniac, les alcanolamines, les hydroxydes d'alkyl- ou alkylaryl ammonium quaternaire, de préférence les solutions aqueuses de ces composés, les composés alcalins et l'ammoniac étant particulièrement préférés.

9. Procédé selon l'une ou plusieurs des revendications 1 à 8, caractérisé en ce que, pour l'oxydation de l'acétaldéhyde, on utilise les agents d'oxydation organiques ou inorganiques, choisis de préférence dans le groupe des peroxydes, des composés perhydroxydes, des peresters, des persulfates, des peroxydisulfates, des perborates inorganiques ou organiques, de $H_2O_2$, de l'ozone, de l'oxygène, en particulier les solutions aqueuses ou les dilutions aqueuses d'agents d'oxydation non-gazeux $H_2O_2$ étant particulièrement préféré.

10. Procédé selon l'une ou plusieurs des revendications 1 à 9, caractérisé en ce que l'on utilise l'agent d'oxydation avec un excès de 3 à 7 fois la quantité stoechiométrique, et lorsque l'on a terminé la réaction d'oxydation, l'agent d'oxydation qui se trouve éventuellement en excès est détruit par l'addition de composés ayant une action catalytique ou de réduction, de préférence de composés à action catalytique ou réductrice choisis dans le groupe des sels métalliques, des oxydes métalliques, des hydroxydes métalliques, des poudres métalliques de fer, de cobalt, de nickel, de palladium, de platine, d'argent ou d'agents réducteurs choisis dans le groupe de l'acide ascorbique, de la rongalite, des sulfites, du sucre ou des composés de l'hydrazine.

**11.** Procédé selon l'une ou plusieurs des revendications 1 à 10, caractérisé en ce que les teneurs résiduelles en esters vinyliques monomères saponifiables par voie alcaline, de préférence en acétate de vinyle, ainsi qu'en acétaldéhyde, dans la dispersion aqueuse de matière plastique, après la fin des réactions d'élimination par hydrolyse et oxydation, est chaque fois inférieure à 0,01 % en poids, de préférence ≤0,002 % en poids, rapporté à la dispersion.

**12.** Procédé selon l'une ou plusieurs des revendications 1 à 11, caractérisé en ce que après la fin des réactions d'élimination, la valeur de pH des dispersions aqueuses est établie à la valeur initiale de pH de la dispersion de départ, de préférence à une valeur de pH <7, par addition d'acides inorganiques ou organiques, de préférence choisis dans le groupe de l'acide acétique, de l'acide propionique, de l'acide formique, de l'acide sulfurique, en particulier des dilutions aqueuses de ces acides.

**13.** Utilisation de dispersions aqueuses de matières plastiques obtenues selon une ou plusieurs des revendications 1 à 12, comme agents liants dans des préparations aqueuses à faible taux d'émissions ou dépourvues d'émissions, pour des revêtements, des enductions, des mortiers pour enduits, des mortiers décoratifs, des colles, des agents d'encollage du papier, des agents de collage pour non-tissés, des adjuvants pour textiles, des agents de revêtements de denrées alimentaires, des peintures et des formulations chimiques et techniques.